(19) **Europäisches Patentamt / European Patent Office / Office européen des brevets**

(11) **EP 3 014 837 B1**

(12) **EUROPEAN PATENT SPECIFICATION**

(45) Date of publication and mention
of the grant of the patent:
**07.08.2019 Bulletin 2019/32**

(51) Int Cl.:
***H04L 29/06*** *(2006.01)*

(21) Application number: **14733144.1**

(22) Date of filing: **23.06.2014**

(86) International application number:
**PCT/EP2014/063188**

(87) International publication number:
**WO 2014/206945 (31.12.2014 Gazette 2014/53)**

(54) **A COMPUTER IMPLEMENTED METHOD TO IMPROVE SECURITY IN AUTHENTICATION/AUTHORIZATION SYSTEMS AND COMPUTER PROGRAM PRODUCTS THEREOF**

KOMPUTERIMPLEMENTIERTES VERFAHREN ZUR SICHERHEITSVERBESSERUNG IN AUTHENTIFIZIERUNGS/AUTHORISIERUNGSVORRICHTUNGEN UND ENTSPRECHENDE KOMPUTERPROGRAMME

PROCÉDÉ INFORMATIQUE D'AMÉLIORATION DE SÉCURITÉ DANS DES SYSTÈMES D'AUTHENTIFICATION/AUTHORISATION ET PROGRAMMES D'ORDINATEUR CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2013 EP 13382237**
**09.10.2013 EP 13382396**
**09.10.2013 EP 13382397**
**09.10.2013 EP 13382398**

(43) Date of publication of application:
**04.05.2016 Bulletin 2016/18**

(73) Proprietor: **Telefonica Digital España, S.L.U.**
**28013 Madrid (ES)**

(72) Inventors:
• **ALONSO CEBRIÁN, José María**
**E-28013 Madrid (ES)**
• **BARROSO BERRUETA, David**
**E-28013 Madrid (ES)**
• **PALAZÓN ROMERO, José María**
**E-28013 Madrid (ES)**
• **GUZMÁN SACRISTÁN, Antonio**
**E-28013 Madrid (ES)**

(74) Representative: **Carlos Hernando, Borja**
**Garrigues IP, S.L.P.**
**Hermosilla, 3**
**28001 Madrid (ES)**

(56) References cited:
**WO-A2-02/095554     US-A1- 2009 183 247**

## Description

Field of the art

The present invention is directed, in general, to authentication and authorization systems. In particular, the invention relates to a computer implemented method and computer program products to improve security in authentication/authorization systems in which the access to different resources and actions defined for a given user are controlled.

Background of the invention

In recent years, web fraud detection market has increased considerably, so innovation in authentication and authorization processes has become of great importance.

The increasing complexity of applications has led to the adoption of many security techniques increasingly sophisticated. One of the classifications that can be proposed for the study of these security techniques allows distinguishing between authentication solutions and authorization solutions. The authentication techniques are designed to verify a person is the one who claims to be. In order to add more reliability in verifying that actually a person corresponds to the identity that is being checked, many alternative authentication schemes can be taken or the number of factors to build this authentication can be extended.

There are many solutions designed to strengthen the authentication processes and, by extension, to fortify the authorization processes. Once users have been securely identified, there are authorization schemes that allow flexibility and robustness in assigning permissions to users to ensure secure access to system resources. However, there are threats which cannot yet be thwarted by adopting any of the existing schemes for the authentication/authorization, or this adoption is too expensive to afford it. These threats directly affect the way the access to specific resources is performed. A method to address these threats involves the designing of brand new security mechanisms. These mechanisms must guarantee that once the identity of a user has been verified and the level of authorization to a resource for this user has been checked, the actions taken by the user of that resource are not intercepted and modified by any attacker.

In any authorization model different techniques that facilitate access to various system resources are included. The user role information, the access control data provided when the user is authenticated, are examples of information that can be used to determine whom to give access to what resources and how this access has to be guaranteed. Ultimately, determining what should be accessed by the users, will be specified for each application. For this reason, sometimes it will be difficult to provide a general authorization scheme. It will be necessary to define an application-specific logic to determine what users can access and how they would perform these accesses. From this idea, there are many solutions that propose secure and flexible schemes for the implementation of the authorization. In all these solutions, the security must be guaranteed by the correct selection of the authentication mechanism and a correct implementation of the selected authorization scheme.

Some of the solutions provide flexibility by defining their own SDK to encourage the use of their schemes for authentication/authorization. Today, most of the SDK are based on concepts introduced by OAuth and do not suppose a risk by themselves. This applies to Microsoft Live Connect, Facebook PHP SDK and Windows 8 SDK Authentication Broker. If they exist, the threats should come from a deficient use of these SDK. In fact, regardless of threats derived by a poor implementation of the scheme chosen, most of the threats that can be defined on an authorization system coincide with the threats defined for authentication systems. This coincidence has to do with the misuse of the credentials used to manage permissions granting access to resources [2], [5].

In [2] four different levels are defined in terms of the consequences of authentication and authorization errors and misuse of credentials. Level 1 is the lowest level (the most insecure) and level 4 is the highest.

- Level 1- An attacker can perform repeated logon trials by guessing possible values of the token authenticator. An attacker is also able to replay previously captured messages (between a legitimate user and a verifier) to authenticate as that user to the verifier. NIST recommends the usage of a single or multi-factor authentication with no identity proof in order to provide protection against these online guessing and replay attacks.
- Level 2- An attacker can listen passively to the authentication protocol to capture information which can be used in a subsequent active attack to masquerade as the user. NIST recommends the usage of single or multi-factor authentication to provide protection against these eavesdropping attacks and all the attacks from the level 1.

- Level 3- The attacker positions himself or herself in between the user and verifier so that he or she can intercept and alter the content of the authentication protocol messages. The attacker typically impersonates the verifier to the user and simultaneously impersonates the user to the verifier. Conducting an active exchange with both parties simultaneously may allow the attacker to use authentication messages sent by one legitimate party to successfully authenticate to the other. NIST recommends the usage of a multi-factor authentication and wide use of OTP. It also suggests a token used for authentication to be unlocked by the user using a password or biometrics. Adopting these solutions provides protection against verifier impersonation attacks, MitM attacks and the attacks from level 2.

- Level 4- An attacker is able to insert himself or herself between a user and a verifier subsequent to a successful authentication exchange between the latter two parties. The attacker is able to pose as a user to the verifier, or vice versa, to control session data exchange. On the other hand, the attacker may compromise or otherwise exploit authentication tokens and may intercept all input or output communications from the device (Man-in-the-device (MitD) attacks or Man-in-the-Browser (MitB) attacks. The attacker can do this infecting the system with malware. NIST suggests the usage of Multi-factor authentication with FIPS-140-2 certified tamper-resistant hardware (hardware tokens) [4] to get protection against these session hijacking attacks and the attacks from the level 3.

For the first three levels, attacks and existing solutions are both focused on the way of verifying the user's identity. At level 4, NIST proposes the use of solutions against session hijacking and others attacks over authentication processes. This session hijacking involves an attacker takes advantage of the legitimate exchange of credentials that a user makes to comply with the authentication process. Once this validation is accomplished, the attacker then intervenes in the communication that takes place. This type of attack can be implemented in two ways: actively acting, hijacking the connection and leaving out of it to the legitimate user, or, remaining hidden and modifying the content of communication transparently to the user. Whatever the implementation of this attack, it is important to observe that this is an attack aimed at breaking the authorization system, leaving intact, though useless, the authentication system. Although there are alternatives to proactively protect systems from this threat, there is no adequate solution to mitigate the effects of the attack once the device from which the resource access is requested, is committed.

NIST suggests employing FIPS-140-2 certified tamper-resistant hardware (hardware tokens) [4]. Using these devices provides the users the ability to generate a single use password (one time password, OTP) to prove their identity to each transaction. In addition, there are hardware implementations of these tokens that can generate other OTPs coded to contain information on how to complete a specific transaction.

Different criteria can be defined to establish comparison between authentication/authorization schemes. In [1] the authors suggest the need to define three criteria in order to perform an effective comparison. These aspects are: security, usability and complexity on implementation (deployability). This paper presents an intensive study to instrument the comparison through the definition of metrics. Following table summarizes the metrics defined for each criterion.

| Usability | Memory-Effortless |
| | Scalable-for-Users |
| | Nothing-to-Carry |
| | Physical-Effortless |
| | Easy-to-Learn |
| | Efficient-to-Use |
| | Infrequent-Errors |
| | Easy-recovery-from-Loss |
| Deployability | Accessible |
| | Negligible-Cost-per-User |
| | Server-Compatible |
| | Browser-Compatible |
| | Mature |
| | Non-Proprietary |
| Security | Resi lient-to-Physical-Observation |
| | Resilient-to-Targeted-Impersonation |
| | Resilient-to-Throttled-Guessing |
| | Resilient-to-Unthrottled-Guessing |
| | Resilient-to-Internal-Observation |
| | Resiliient-to-Leaks-from-Other-Verifiers |
| | Resilient-to-Phishing |
| | Resilient-to-Theft |
| | No-Trusted-third-Party |
| | Requiring-Explicit-Consent |
| | Unlikable |

In the case of security criterion, the proposed metric set summarizes all the aspects that are usually estimated in defining a threat model. In the definition of these models it is necessary to adopt a number of decisions. And these decisions define the working scenario. For example in the case of OAuth 2.0 [5] the adopted assumptions are as follows:

- The attacker has full access to the network between the client and authorization servers and the client and the resource server, respectively. The attacker may eavesdrop on any communications between those parties. He is not assumed to have access to communication between the authorization server and resource server.
- An attacker has unlimited resources to organize an attack.
- Two of the three parties involved in the OAuth protocol may collude to mount an attack against the third party. For example, the client and authorization server may be under control of an attacker and collude to trick a user to gain access to resources.

Attending to the metrics introduced above, is possible to determine that solutions corresponding to the higher security level (level 4) have poor performance in deployability and usability. Once the assessment of a system allows to determine in which level has to be deployed its authentication system, it is needed to evaluate if the users are authenticated safely and correctly. Although there are some tools that aid in this task [3], [6], deploys in the level 4 are difficult to evaluate correctly. In terms of usability, the use of tampering resistant hardware tokens goes against the adoption of these solutions by users, and it has been proved that this situation leads to a misuse of the credential systems. These tokens are expensive. They are independent devices that the user has to custody and that can be employed with one service provider only. If the users have to deal with more than one service provider that has adopted these tampering resistant hardware tokens, they have to take into custody as many tokens as service providers they have.

Furthermore, in terms of authorization, in [7] the authors explain that, aside from some security issues of each SDK, developers who choose to integrate with one of them make assumptions that can lead to security problems. This is because SDKs are often not well documented and the security exploits nearly always stem from attackers who find ways to violate these assumptions system implementers relied upon.

Along with these difficulties, other problems must be considered to understand the constant increase in fraud arising from the theft of digital identities. For instance, it is not possible to measure a homogeneous security level in all users' digital accounts. It is needed a solution that can equalize the security level of all digital accounts that a user owns. This solution should extend this security not only to the authentication processes but also to the resource authorization processes and all procedures related to such accounts.

Apart from problems derived from the authorization solutions adoption, the most extended solution for authentication, the usage of personal digital certificates, has also many problems that usually have led to a very poor adoption in most systems, especially when they have to provide services to a wide number of clients. For instance, by the user side some of these problems are:

- Valid digital certificate possession. Not all users have to have a valid digital certificate. And, in addition, this certificate may not be used in processes related to authentication. This problem is solved if there is a government program aimed at issuing digital certificates with the identity of its citizens (citizen cards, etc...)
- Digital certificate storage by users. These certificates can be stored in the computer, but this solution limits its use to a single machine. By other hand, they can also be stored on a smartcard. In this case, the limitation to a single computer is beaten to reach all those computers that have a compatible smartcard reader.
- Latency. The processes associated with the implementations of the authentication mechanisms cause always an overhead over the time to authenticate a user.
- Secure environment to execute cryptographic procedures over these digital certificates.

By the service provider side, the problems rise according with the cost of maintaining a Public Key Infrastructure (PKI) infrastructure that always add complexity to the system functionality. However, regardless of these problems, the use of the certificates to authenticate a user is a very robust process that normally involves two steps. First, the issuer entity must associate a user identity with a public key in a safe way. Secondly, a mechanism that allows exploiting the use of cryptographic protocols to verify a user's identity has to be proposed. These two phases should be performed independently using trustable channels.

When the use of these digital certificates is employed to certify the identity of a user computing mobile device there are three different possibilities to store the private information of the certificate and to perform securely the corresponding cryptographic processes: use a pure-software solution to store the private key and let the microprocessor of the computing device perform the cryptographic procedures; use a hardware container (e.g. the SIM of a mobile phone) to securely store and execute the cryptographic procedures without using the computation resources provided by the computing device; or employ a smart-card technology that relies on an external device to store and execute the cryptographic procedures, forcing to design and implement a compatible port to access this device.

US 2009/183247 A1 describes systems and methods of securing access to a network. Access to the network is secured using multifactor authentication, biometrics, strong encryption, and a variety of wireless networking standards. Biometrics includes fingerprints, facial recognition, retinal scan, voice recognition and biometrics can are used in combination with other authentication factors to create a multi-factor authentication scheme for highly secure network access. Requests that require access to secured network resources may be intercepted and a captive portal page returned to challenge a user. Biometric information returned in response to the portal page is used to authenticate the user and determine access rights to the network.

WO 02/095554 A2 relates to authentication using biometrics. An alias for an individual is associated with a reference set of biometric data from the individual and, at a location separate from the reference set of biometric data, information associating the individual with the alias is stored. The invention may operate on an authentication request requesting authentication of a user identified by the alias, along with a candidate set of biometric data from the user and confirming authentication of the user as the registered individual; authentication is granted if the candidate set of biometric data sufficiently matches the reference set of biometric data.

Therefore, a different approach is needed to improve the overall security in the authentication/authorization systems, whatever is the scheme or schemes adopted, minimizing the impact on the usability and deployability of these systems.

References:

[1] Bonneau, J., Herley, C., van Oorschot, P. C., & Stajano, F. (2012, May). The quest to replace passwords: A framework for comparative evaluation of web authentication schemes. In Security and Privacy (SP), 2012 IEEE Symposium on (pp. 553-567). IEEE.

[2] Burr, W. E., Dodson, D. F., & Polk, W. T. (2006). Electronic authentication guideline. NIST Special Publication, 800, 63.

[3] Dalton, M., Kozyrakis, C., and Zeldovich, N., Nemesis: Preventing Authentication & Access Control Vulnerabilities in Web Application, In Proceedings of the 18th conference on USENIX security symposium, (pp. 267-282) USENIX Association.

[4] Evans, D., Bond, P., Bement, A., Security Requirements for Cryptographic Modules, FIPS PUB 140-2 - FEDERAL INFORMATION PROCESSING STANDARDS PUBLICATION. Online Resource: http://csrc.nist.gov/publications/fips/fips140-2/fips 1402.pdf

[5] McGloin M. & Hunt P. (2013, January) OAuth 2.0 Threat Model and Security Considerations. ISSN: 2070-1721. Online resource: http://tools.ietf.org/pdf/rfc6819.pdf.

[6] Sun, F., Xu, L., & SU,Z. (2011,August) Static detection of Access control vulnerability in web applications. In Proceedings of the 20th USENIX conference on Security (pp. 11-11). USENIX.

[7] Wang, R., Zhou, Y., Chen, S., Qadeer, S., Evans, D., & Gurevich, Y. (2013). Explicating SDKs: Uncovering Assumptions Underlying Secure Authentication and Authorization (Vol. 37). Microsoft Research Technical Report MSR-TR-2013.

Description of the Invention

To achieve the above, the invention provides in a first aspect a computer implemented method as defined in independent claim and a computer program product as defined in independent claim 14. Different embodiments are defined in the dependent claims.

The invention aims to improve security in authentication/authorization systems, which comprises: receiving, a first server, from a user having a computing device, a request to be logged into a service of said first server; and authenticating, said first server, credentials information of said user in order to authorize said service request.

In a characteristic manner and on contrary of the known proposals, the computer implemented method of the first aspect further comprises the use of a second server, in connection with said user computing device that has installed therein a dedicated program, for receiving from the first server a first request about a status associated to said user in order to assist the first server in authorizing or rejecting the requested service logging, and in case said requested service logging being authorized, and a request is done by the user to perform an operation in the first server, the second server receiving from the first server a second request about a status that the user has set for said operation and evaluating said operation status to check if the first server being allowed to access the user configuration for said operation. In case the recovered operation status is set as valid, an extra authentication factor mechanism for reinforcing said operation is used, said extra authentication factor mechanism including the use of a public/private key encryption process or the use of a public/private key for generating a digital signature.

In accordance with the invention, the first request performed by the first server comprises: a credential exchange between the first server and the second server in order to provide mutual authentication; verification, by the second server, of said associated status of the user, said associated status been previously set as valid or as invalid by said user and stored in a memory of the second server; and the sending, by the second server, of the associated status of the user to the first server.

The credentials exchange to secure mutual authentication between the first server and the second server, is performed, preferably, via a standard authentication procedure based on certificates' exchange defining, as a result, a secured channel. The exchange is performed to verify that both first server and second server are who they claim to be.

The second server may notify the user in case said request to be logged into a service of the first server is rejected. For instance, by the sending of a Short Message Service (SMS), of an email, of or a message by a smartphone messenger application, or just by the highlighting or pushing in said dedicated program of said user computing device.

The associated status is set as valid (unlocked) or as invalid (locked) a certain period of time and can be modifiable by the user whenever the latter want it. For instance, the user can plan a locking/unlocking policy to automate the management of their accounts held with different servers using different criteria: time, geolocation (different policies for home, work, etc.). Another possibility for modifying said associated status can be by delegating the control said user has of their accounts to other users. This can be done by considering two different options. In the first one, a parental control mechanism is used so the children's (original) accounts access control is delegated to the parent control mechanism. In the second one, a single account allows multiple locks. In this latter case, the unlock action will require that multiple users unlock their locks concurrently. In both cases, the delegation is performed securely maintaining the privacy of every user unchanged.

In addition, the request to be logged into a service and/or the request to perform an operation may be recorded in order to provide statistics. In this way, the user can obtain system usage statistics that reflect activity of the system and track the attempts of impersonation. These statistics inform about when someone had attempted to access to a service with user's username.

In accordance with an embodiment, the solution previously proposed to provide the extra authentication factor mechanism is extended with the use of a public/private key for generating a digital signature by means of: generating and sending, the second server to the dedicated program, a one-time password (OTP) that the user is going to use for setting up the extra authentication factor mechanism; recovering, the dedicated program, a private key of the user in order to digitally sign the received OTP, said recovering been performed after the user having decided to sign the received OTP within the dedicated program and having stored said private key in a software or a hardware mechanism of the computing device; and sending, the dedicated program, the digitally signed OTP to the second server and the digital signature employed, the latter verifying integrity of the received digitally signed OTP with the OTP that the second server generated, and integrity of the private key that was used to perform said signing of the OTP with an stored user public key that the second server (200) had.

In addition, if the private key used to perform the signing of the OTP matches the user public key stored in the second server, the second server sends to the first server the result of said operation status request, performed by the first server, along with the generated OTP; then, the first server request the OTP to the user, the latter recovering the OTP through the dedicated program that further sends it to the first server; finally, the first server checks if the OTP received from the second server and the OTP received from the user matches.

In accordance with another embodiment, the solution proposed to provide the extra authentication factor mechanism is extended by the usage of a public/private key encryption process. This is achieved by means of performing, after having sent the second server the result of said operation status request to the first server including an OTP used by the user for setting up the extra authentication factor mechanism, the following actions: requesting, the first server to the user through an interface, said OTP used by the user for setting up the extra authentication factor mechanism; encrypting, the second server, the OTP with a public key of the user and sending the encrypted OTP to the dedicated program, said public key been previously stored in the second server by the user; recovering, the dedicated program, a private key of the user and using the private key of the user to decrypt the received encrypted OTP, said recovering been performed after the user having stored the private key in a software or a hardware mechanism of the computing device; sending, the dedicated program, the decrypted OTP to the user, the latter sending the decrypted OTP via said interface; and checking, the first server, if the OTP received from the user and the OTP received from second server matches.

In accordance with another embodiment, the solution proposed to provide the extra authentication factor mechanism is extended with the use of a public/private key encryption process. The public/private key encryption process is performed by the first server by means of executing, after the second server having sent the result of said operation status request to the first server, the following actions: first generates an OTP that the user is going to use for setting up the extra authentication factor mechanism; then encrypts the generated OTP with a public key of the user and further sends the encrypted OTP to the second server, said public key been previously stored in the first server by the user; and after that requests to the user through an interface, the OTP; at that time the second server sends the encrypted OTP to the dedicated program which recovers a private key of the user and uses the private key of the user to decrypt the received encrypted OTP, said recovering been performed after the user having stored the private key in a software or a hardware mechanism of the computing device; finally the dedicated program sends the decrypted OTP to the user that sends the decrypted OTP via said interface to the first server, so that the first server can check if the OTP received from the user and its own generated OTP matches.

The requesting of the OTP to the user and the sending of the encrypted OTP to the dedicated program in this embodiment are preferably performed at the same time.

In accordance with yet another embodiment, the solution proposed to provide the extra authentication factor mechanism is extended with the usage of a public/private key for generating a digital signature by means of performing, after the second server having sent the result of said operation status request to the first server, the following actions: first, the first server generates an OTP that the user is going to use for setting up the extra authentication factor mechanism and sends the generated OTP to the second server; after that, the first server requests the user through an interface the OTP and the second server sends the OTP to the dedicated program; the dedicated program then recovers a private key of the user in order to digitally sign the received OTP, said recovering been performed after the user having decided to sign the received OTP within the dedicated program and having stored said private key in a software or a hardware mechanism of the computing device, and sends the digitally signed OTP and the digital signature employed for the signing to the second server which forwards the received information to the first server; preferably, at the same time of the sending of the digitally signed OTP and the digital signature employed for the signing to the second server, the dedicated program also sends the digitally signed OTP to the user that can then send to the first server the digitally signed OTP via said interface; finally, the first server checks if the digitally signed OTP received from the user and the digitally signed OTP received from the second server matches.

The subject matter described herein can be implemented in software in combination with hardware and/or firmware, or a suitable combination of them. For example, the subject matter described herein can be implemented in software executed by a processor.

According to a second aspect there is provided a computer program comprising computer program code means adapted to perform the steps according to the computer implemented method of the first aspect of the invention when said program is run on a computer, a digital signal processor, a field-programmable gate array, an application-specific integrated circuit, a micro-processor, a micro-controller, or any other form of programmable hardware.

Embodiments of the invention also comprise a computer program product including program code means adapted to perform other embodiments of the invention according to the methods of claims 3, 4, 5, 6 or 8.

The present invention allows the user to plan a locking/unlocking policy to automate the management of accounts held with different servers using different criteria: time, geo-localization (different policies for home, work, etc.); delegate the control of their accounts to other said second server users; enable monitoring systems that allow users to be warned of identity theft attempts or untrue user's impersonation in operation execution requests, providing a course of action to take action to control the digital identity; establish a second factor for authentication for verifiers that are not providing it; establish an account to be blocked or unblocked and change it with immediate effect by the use of a switch control; fix a schedule to Valid/Invalid (unlocked/locked) an account or said operation automatically based on time and date settings. Once a check-status request is received the second server responds based on the current state of the scheduler; improve the security level of an account or said operation by configuring a second factor authentication integrated with second server; control different actions associated with an account, authorizing or banning the execution of them in a compatible manner with the authorization scheme established.

Furthermore, the invention allows homogenizing the security level for all the different accounts a user has. It allows offering a security level comparable with level 4 defined by NIST. And this is done for different accounts that can be now controlled with only one device and regardless of the authentication/authorization scheme defined for every service provider.

The invention does not propose any new authentication/authorization scheme. Indeed, the intention is to complement the existent schemes with an extra security layer. Although this may limit its usability and deployability, the invention design is oriented to minimize the impact over these criteria. As it is stated before, the authentication scheme choice determines the security risk that is assumed for an authorization system. What is proposed here is to reduce the risk taken with the choice of any authentication/authorization mechanism reducing the time in which this system is accessible to be broken.

Assuming that there is a relationship between the success and failure of an attack on the auth system with the time in which this system is accessible (exposure time) as conditional probability (p (SuccessfulAttack | exposed)) is possible determining that the relative risk (RR) satisfies the following expression:

$$RR = \frac{\mathrm{p(SuccessfulAttack|exposed)}}{\mathrm{p(SuccessfulAttack|unexposed)}} > 1 \quad Eq.1$$

In this expression it is assumed that the probability of success of an attack is directly related to the exposure time. That is, the continuous exposure of a computer system, in this case the authentication system, increases the likelihood of success of an attack in contrast with a scenario in which the exposure is limited. In the same way one can evaluate the following expression:

$$\frac{\dfrac{p(successfulAttack|exposed)}{p(FailedAttack|exposed)}}{\dfrac{p(SuccessfulAttack|unexposed)}{p(FailedAttack|unexposed)}} > 1 \quad Eq.\,2$$

Indicating that there is a greater probability for a successful attack if exists a continued systems exposure. It is also possible to estimate the portion of all successful attacks that could have been avoided if the exposure had been avoided (Attributable Risk Percent (ARP)). This is calculated with expression 3.

$$ARP = \frac{RR-1}{RR} \quad Eq.\,3$$

This expression allows assessing the investment required to enable a solution designed to reduce the time that is accessible authentication process. The professional experience and technical knowledge of the documented attack techniques to break authentication/authorization systems confirm the assumption made earlier (RR> 1).

This reduction in the exposure time allows mitigating the effects of most of the threats related with the authentication phase before a user can access to some privileged resources. This invention also permits reducing the exposure of particular actions that can be taken after the login process has been accomplished. Therefore, this exposure reduction supposes the limitation in the time in what the action can be executed and the establishment of a channel that allow to send critical information to assure the integrity of this action execution.

The invention encompasses the solutions for the threats defined by NIST. But, in this case, these solutions are provided to users through a dedicated program designed to be executed in a mobile device, which facilitates the interaction with a second server. In addition, this second server brings privacy in the communications relative to the control of the user's accounts and incorporates all the control information that the users have set about the actions the service providers have offered them.

Brief Description of the Drawings

The previous and other advantages and features will be more deeply understood from the following detailed description of embodiments, with reference to the attached, which must be considered in an illustrative and non-limiting manner, in which:

Fig. 1 is an illustration of the present invention general architecture.
Fig. 2 is a flow diagram illustrating an account pairing sequence with authorization.
Fig. 3 is a flow diagram illustrating how a status of a user account can be checked for authentication.
Fig. 4 illustrates the embodiment in which the accuracy of the extra authentication factor solution for a service provider that does not implement a PKI is increased based on a public/private key encryption process.
Fig. 5 illustrates the embodiment in which the accuracy of the extra authentication factor solution for a service provider that does not implement a PKI is increased based on digital cryptographic signature.
Fig. 6 illustrates the embodiment in which the accuracy of the extra authentication factor solution for a service provider that implements a PKI is increased based on a public/private key encryption process.
Fig. 7 illustrates the embodiment in which the accuracy of the extra authentication factor solution for a service provider that implements a PKI is increased based on digital cryptographic signature.

Detailed Description of Several Embodiments

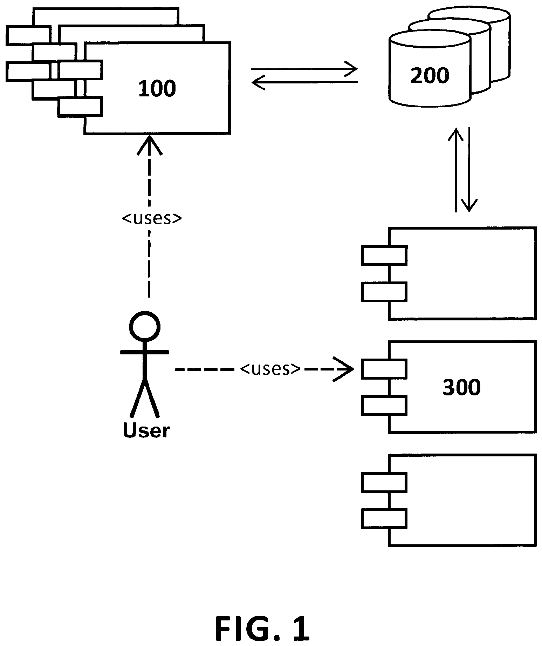

In reference to Fig. 1 it is showed the general architecture of the present invention. Concerning Fig. 1, a user computing device 100 such as a mobile phone, a smartphone, a tablet-PC or a PDA among any other, is used by said user in order to login into a dedicated program 102 in communication with a second server 200 and to manage the status for every first server 300 with which a user wants to request a service.

With this new proposal said user 100 can unblock said operation defined for a particular account created with said first server 300. As stated below, this action can enhance the control defined for this account by decision of the first server 300. In this decision, the first server 300 can choose to incorporate a new control of security beyond the block/unblock default option or second authentication factor mechanism. This control of security consists of to provide a communication channel from the user 100 to the first server 300, through the second server 200. The first server 300 can configure the system to ask the user 100 for a particular information related to said operation to be performed. This information can be used by the second server 200 to verify if the user 100 is who actually is demanding said operation and to confirm if the operation that has arrived to the first server 300 is exactly as the one the user 100 had ordered.

Assuming that the first server 300 could want to verify the integrity of the operation, it can be selected what parameters are critical to ensure the operation integrity. In this case, it is important that the requested information corresponds univocally with the operation critical parameter in order to identify it correctly.

In this architecture, the user 100, besides having an account in the second server 200, can have multiple accounts with different service providers. One of these service providers is the first server 300. Once the user 100 completes the login process with these accounts he or she will have access to multiple operations specific to each service providers. The second server 200 eases how a first server 300 can integrate this control within the logic of its applications.

When a first server 300 decides to integrate its services, it will provide the ability to link their accounts with the accounts that the user 100 has in the second server 200. When the user 100 decides to establish this link, she or he starts a pairing process that ensures complete privacy to the user 100. Once the pairing process is completed, the user 100 can access the configuration of the control of the account with the first server 300 from a dedicated program 102 (i.e. a mobile application).

Every time the settings associated with an account are changed on said mobile application or dedicated program 102, this modification is immediately propagated to the second server 200 to change the status of the account that can be accessed by the first server 300.

Second server core implements the main function of the second server 200: lock or unlock said user account with the first server 300 and the operations provided by first server 300. In order to do that, the second server 200 accepts and processes the check-status requests sent from the first server 300. This second server 200 also manages all data about the links with said first server 300 defined by the user 100 and the requests for the pairing of new locks. The key is the user 100 is never asked for any private information. Once the user 100 creates his account with second server 200, he can establish locks with different service providers, like said first server 300. To activate these locks the second server 200, according to an embodiment, generates a token. A unique token and the definition of secured channels are needed to complete the pairing process between the user 100 and the first server 300. As result of this pairing process, the cryptographic token is sent from the second server 200 to the first server 300 who has to store this information with their user's personal data. Later, this cryptographic token will be used to request the corresponding lock status. The user 100 can modify the status of their locks, by the activation or configuration of the different options that second server 200 provides.

In case the user 100 has set up a lock with a second (or extra) authentication factor mechanism over an account or a particular action, the second server 200 will incorporate all the needed logic for the generation and communication of the OTP. When the second server 200 receives a request from the first server 300 asking for the user account status, a second authentication factor is triggered. An OTP is generated and sent to the user 100. The same OTP is sent to the first server 300 along with the account status. If the status is ON and the user 100 has activated the second factor, the first server 300 should prompt the user to introduce the OTP to proceed with the operation.

Now, if the user 100 has set up a lock over a said operation with an integrity factor to verify that the operation parameters have not been modified, said second server 200 incorporates the needed logic to get the critical information from the user 100 and from the first server 300 and to check if both are equal. The second server 200 sends the result of the checking as the account status to the first server 300. In case of mismatching, the first server 300 can conclude that an intruder can be intercepting the information from the user 100. The first server 300 can then build mechanisms to elude the fraud and to raise security alerts.

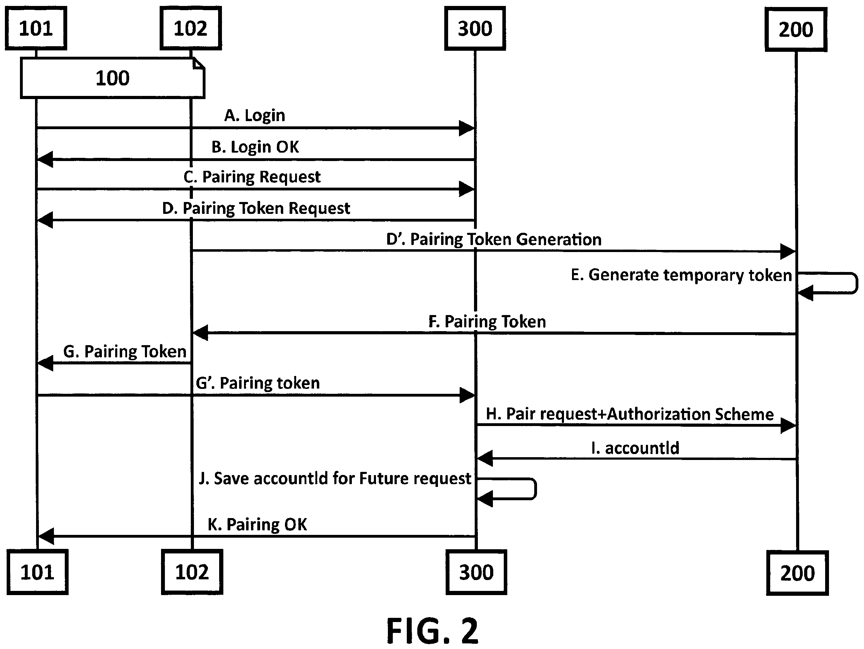

In reference to Fig. 2 it is illustrated a pairing process of the user 100 account of the second server 200 with different accounts for different first servers 300. In Fig. 2, once a user 100, using for instance the dedicated program 101 such as a browser, has completed the login process (A-B) with a first server 300 (in this particular case a Bank online, a social network, a credit card providers, etc.), the user 100 decides to perform said accounts' pairing process. The user 100 requests the pairing to the first server 300 (C) using the browser 101. As response, the first server 300 asks for a pairing token (D). The user 100 then uses the dedicated program 102 (D') to get this pairing token from the second server 200, after a previous login process. The second server 200 generates a token (for instance as an OTP) (E) and sends it to the user's dedicated program 102 (F). This token can be used for several pairing processes meanwhile it is valid. The user get the token (OTP) from the dedicated program 102 and introduces it in the web page displayed in the browser 101 by the first server 300 (G-G'). The first server 300 then sends the received token to the second server 200, after a previous credentials exchange (H). If the first server 300 identity is validated, the second server 200 stores the link between the user 100 and the first server 300 and generates a new token that identifies this link. This token (accountID) is sent to the first server 300 (I) and there it is stored for future communications (J). At last, a pairing acknowledges is sent to the user's browser 101 (K).

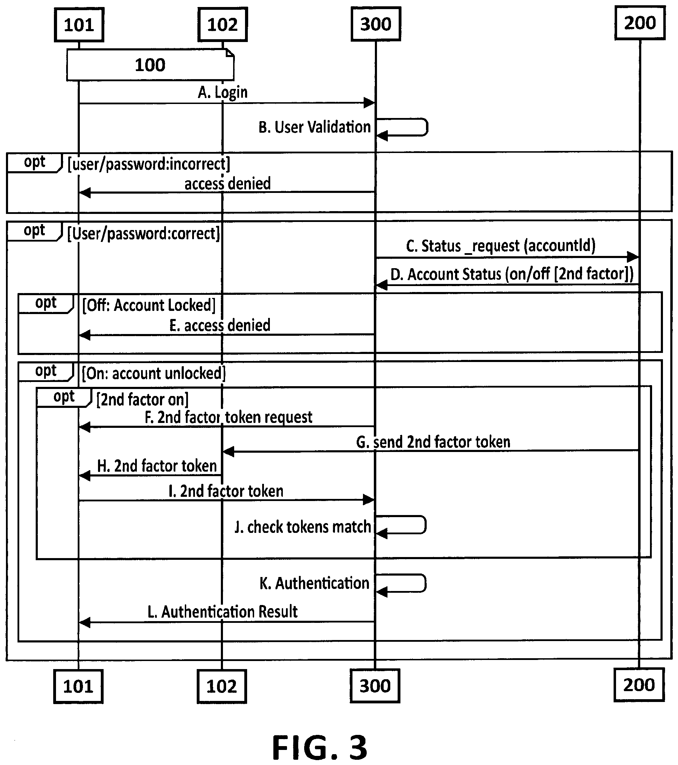

In reference now to Fig. 3 it is illustrated how a status of a user account can be checked for authentication. In Figure 3, a user 100, using for example a browser 101, requests to be logged in a service (A) of a first server 300 so once user existence has been validated (B) by said first server 300, the latter demands to the second server 200 the user account status (C). Then the second server 200 initializes the credentials exchange before the result of the account status information is sent (D). With the result status, the first server 300 makes the decision of allowing or blocking the user access (E).

In an embodiment, if the account status is unlocked or valid but the second authentication factor is on, within the answer of the status request, the second server 200 sends an OTP to the first server 300 that has to employ to complete the authentication. The first server 300 then requests to the user 100 the OTP that is going to be a temporal second factor (F). Then the second server 200 sends the same OTP to the to the user's dedicated program 102 (G). The user 100 recovers the OTP from the dedicated program 102 and introduces it in the browser 101 (H) and sends it to the first server 300 (I). The first server 300 can check if the OTP sent through the browser 101 matches with the one received with the account status (J). Depending on of the results of this verification, the first server performs the authentication process (K) and communicates the result to the user via 101.

When a first server 300 sends a Status_Request, the second server 200 understands that someone, with the proper service identification information (i.e. ID and password), is trying to access to the service. If the account status is set as blocked, or if this request has come in a moment that is not included in the interval defined by the user 100, the second server 200 registers this event as a fake attempt. The second server 200 could send, according to an embodiment, an alert of this event to the user if said user has configured it so (for instance by sending a Short Message Service (SMS), an email, a message by a smartphone messenger application, by a highlighting or pushing in said dedicated program 102 of said user computing device 100, etc.) or just update the statistics for a later revision. Then the second server 200 returns the status associated with the account as locked.

With the aim of improving the security of any authentication/authorization system, the use of the said second server 200 is proposed as a new layer that gives the users the chance of control the access to the resources and procedures associated with their accounts defined with any first servers. These resources and procedures are seen as operations which depend on the main actions defined for an account (i.e. login process). This dependency is established like a hierarchy where the changes in the root entries are propagated to their children.

Moreover, a secure channel for certificate exchange in order to improve authentication is also proposed. Therefore, instead of having to configure a process to verify the usage of a digital certificate by legitimate user (e.g. configuration of a smartcard reader) for each of the computers from which access is desired, said user just has to use the dedicated program 102 in communication with the second server 200 to do it. Two different scenarios are proposed: first, it is considered a scenario in which the first server 300 is unable or has decided not to implement a Public Key Infrastructure (PKI) within its organization. In this case, the present invention not only provides a solution to unify the interfaces that the user 100 has to employ to introduce her/his private key and operate with it. In addition, it releases the first server 300 from the responsibility of implement and support a PKI. The second scenario proposed gives response for those service providers that do not want to rely on a third party to manage their PKI.

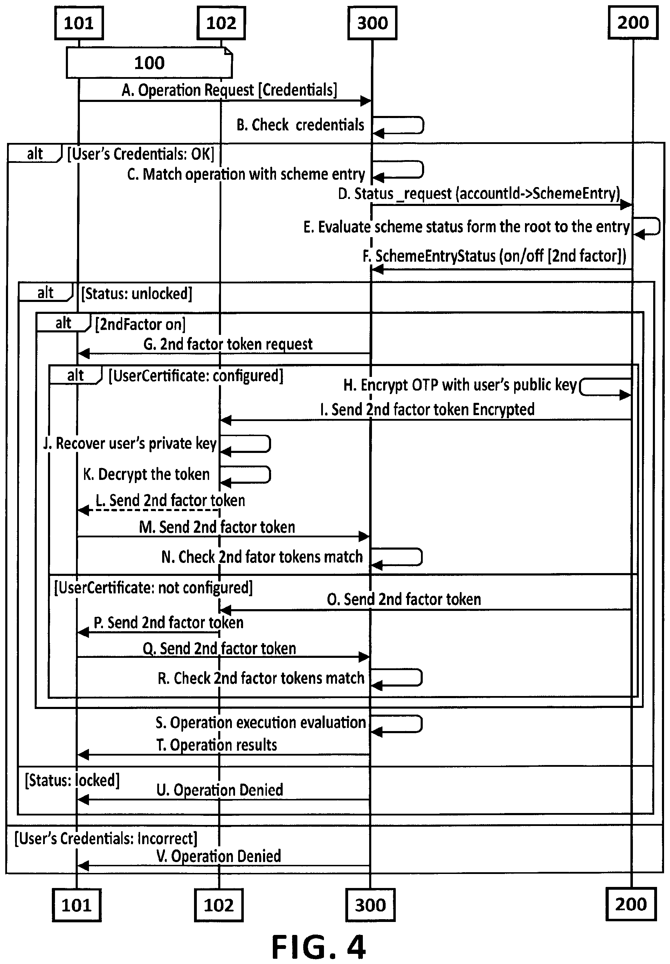

Fig. 4 illustrates an embodiment in which the accuracy of the extra authentication factor mechanism is increased based on a public/private key encryption process to demonstrate that the user, who is demanding an operation, has one of the next alternatives: a private key of a digital certificate, an specific computing mobile device with a private/public system built-in or a physical token that provides all the necessary to perform cryptographic procedures in a secure way (e.g. smartcard used as citizen card). The extra authentication factor mechanism assures that the user who is demanding the execution of a particular operation is, also, in possession of the legitimate user's credentials to access to the second server 200.

Therefore, once the user 100 has requested an operation (A) and has exchanged the credentials that authenticate her/him for the first server 300 (B), the first server 300 determines which ID allows to identify this operation for this user 100 (C) to the second server 200 and performs an operation status request to said second server 200 to retrieve the status that the legitimate user 100 has set, through the second server 200 (D), for said operation. Then, the second server 200 checks if the first server 300 is allowed to access to the configuration that the user 100 has established to the particular operation and recover the status (E) that can be on or off. This information can, also, indicate if the corresponding operation is reinforced with said extra authentication factor. In this embodiment, this extra authentication factor is, in addition, hardened with the usage of a digital certificate. So, based on encryption, it validates that the user 100, who is in possession of the credentials with the second server 200 and who knows the private key of the legitimate user, can provide them at the moment when the operation is requested.

At that time, the second server 200 sends the information related with the status to the first server 300 (F), where it has been included the token used as OTP. While the first server 300 requests the OTP to the user 100 (G), the second server 200 uses the public key information previously stored by the user 100 to encrypt the OTP (H) and sends it to the user's dedicated program 102 (I). Within the device, and depending of the alternative chosen to store the user's private key (a pure-software solution, a hardware container or a smart-card technology) and operate with it, the solution retrieves this private key (J), decrypts the OTP (K) and allows the user 100 to enter it in the interface that the first server 300 has employed for demand this token (L). Once this token has been sent to the first server 300 (M), it is possible to determine if it matches with the token received from the second server 200 (N). If both tokens are the same, then the first server 300 can assume that the user who is demanding an operation could correspond with the user, who has decrypted the OTP, has sent it and, consequently, is in possession of the private key of the digital certificate stored by the second server 200.

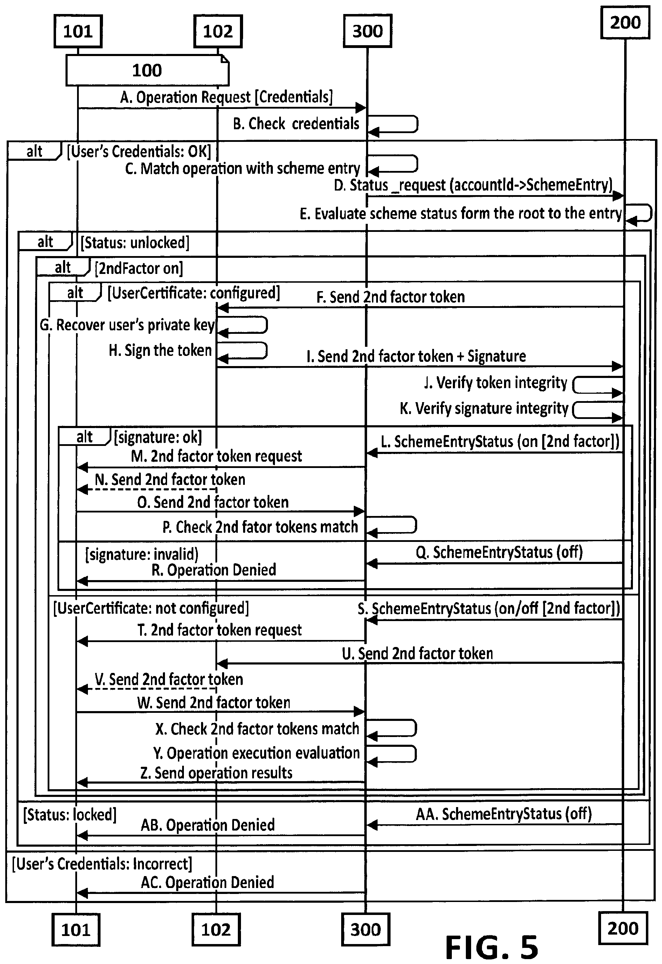

Fig. 5 illustrates an embodiment in which the accuracy of the extra authentication factor solution is increased by the usage of a public/private key to digitally sign an authentication token to show that the user 100 who is demanding an operation is in possession of the private key of a certificate, an specific mobile device with the private information built inside or a physical token guarding this private information (e.g. smartcard used as citizen card). Therefore, in this embodiment, the first server 300 is absolved from the responsibility of incorporating or supporting any public key infrastructure.

Once the user 100 has requested an operation (A) and has exchanged the credentials that authenticate her/him for said first server 300 (B), the first server 300 determines which ID allows to identify this operation for this user 100 (C) to said second server 200 and performs an status request to the second server to retrieve the status that the legitimate user has set, through the second server 200 (D), for said operation. The second server 200 checks if the first server 300 is allowed to access to the configuration that the user 100 has established to the particular operation and recover the status (E) that can be on or off. This information can, also, indicate if the corresponding operation is reinforced with the extra authentication factor. In this embodiment, this extra authentication factor is, in addition, hardened with the usage of a digital certificate. So, based on a digital signature mechanism, it validates that the user 100, who is in possession of the credentials with the second server 200 and who knows the private key of the legitimate user, can provide them at the moment when the operation is requested.

Therefore, and in difference with other embodiments, before sending the operation status to the first server 300, an exchange of information is initialized if the second server 200 detects that said operation is configured with the extra authentication factor reinforced with digital signature. First, the first server 300 generates and sends an OTP as token for this extra factor mechanism to the dedicated program 102 (F). With this OTP, if it is needed, some information about the operation can be attached. This way, the user can decide sign or not sign the OTP received taking into consideration this information. If the user 100 has decided to sign, within the computing device and depending of the alternative chosen to store the user's private key and operate with it, the solution retrieves this private key (G), compute the signature for this OTP (H) and it re-sends the OTP along with the signature to the second server 200(1). Then the second server 200 verifies if the OTP is the same that was sent (J) and verifies, also, the signature (K). For this verification, the second server 200 previously must have stored the legitimate user's public key. If it is a valid signature then the second server 200 sends the status to the first server 300 (L). Along with the status information, the same OTP used to authenticate the user 100 is sent to the first server 300. In fact, this is an OTP verified. So, when the first server 300 requests the OTP to the user 100 (M) and verifies that the user 100 sends the same OTP (O and P), at least, it can be sure that the user 100 who requests the operation is in possession of the legitimate user's credentials for the second server 200 and that this user 100 also custodies the private key of the digital certificate. If the signature received by the second server 200 is not valid, then the second server 200 returns an OFF status for the operation (Q) and the first server 300 could decide to deny its execution (R).

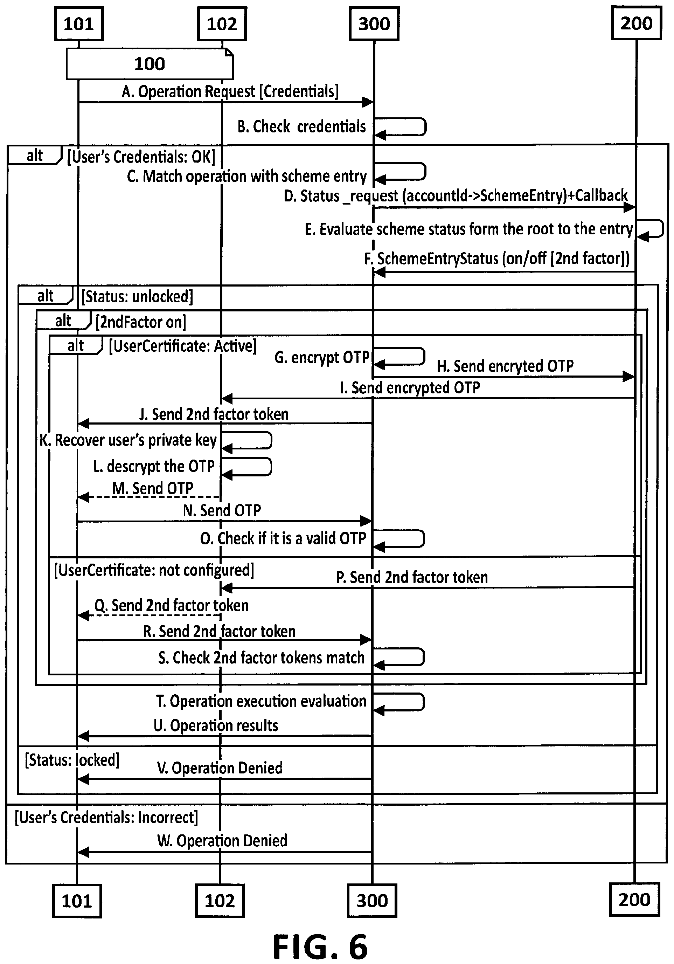

Fig. 6 illustrates an embodiment in which the accuracy of the extra authentication factor mechanism is increased based on a public/private key encryption process to demonstrate that the user who is demanding an operation is in possession of the private key of a certificate, an specific computing mobile device with a private/public system built-in or a physical token that provides all the necessary to perform cryptographic procedures in a secure way (e.g. smartcard used as citizen card). In this case, the solution is provided in view of the fact that the first server 300 assumes the responsibility of incorporating or supporting a public key infrastructure.

Once the user 100 has requested an operation (A) and has exchanged the credentials that authenticate her/him for the first server (B) 300, the first server 300 determines which ID allows to identify this operation for this user (C) to the second server 200 and performs an status request to the said second server to retrieve the status that the legitimate user has set, through the second server 200 (D), for said operation. The second server 200 checks if the first server 300 is allowed to access to the configuration that the user 100 has established to the particular operation and recover the status (E) that can be on or off. This information can, also, indicate if the corresponding operation is reinforced with the extra authentication factor. In this embodiment, this extra authentication factor is, in addition, hardened with the usage of a digital certificate. So, based on encryption, it validates that the user 100, who is in possession of the credentials with the second server 200 and who knows the private key of the legitimate user 100, can provide them- credentials and private key - at the moment when the operation is requested.

The second server 200 then sends the information related with the status to the first server 300 (F), but, in difference with other embodiments, now the OTP is not generated by the second server 200. Instead of that, it is the first server 300 which generates it and, using user's public key information, previously stored, encrypts it (G) and sends it to the second server 200 (H). Here the second server 200 plays the role of secure channel just making easy and secure the exchange of information. So, while the first server 300 requests the OTP to the user 100 (J), the second server 200 sends the encrypted OTP to the dedicated program 102 (I). The dedicated program 102 receives the ciphered information and, depending of the alternative chosen to store the user's private key and operate with it, the solution retrieves this private key (K), decrypts the OTP (L) and allows the user 100 to enter it in the interface that the first server 300 have employed for demand this token (M). Once this token has been sent to the first server 300 (N), it is possible to determine if it matches with the token received from the second server 200 (O). If both tokens are the same, then the first server 300 can assume that the user 100 who is demanding an operation could correspond with the user 100 who has decrypted the OTP, has sent it and, consequently, is in possession of the private key of the digital certificate stored by the first server 300.

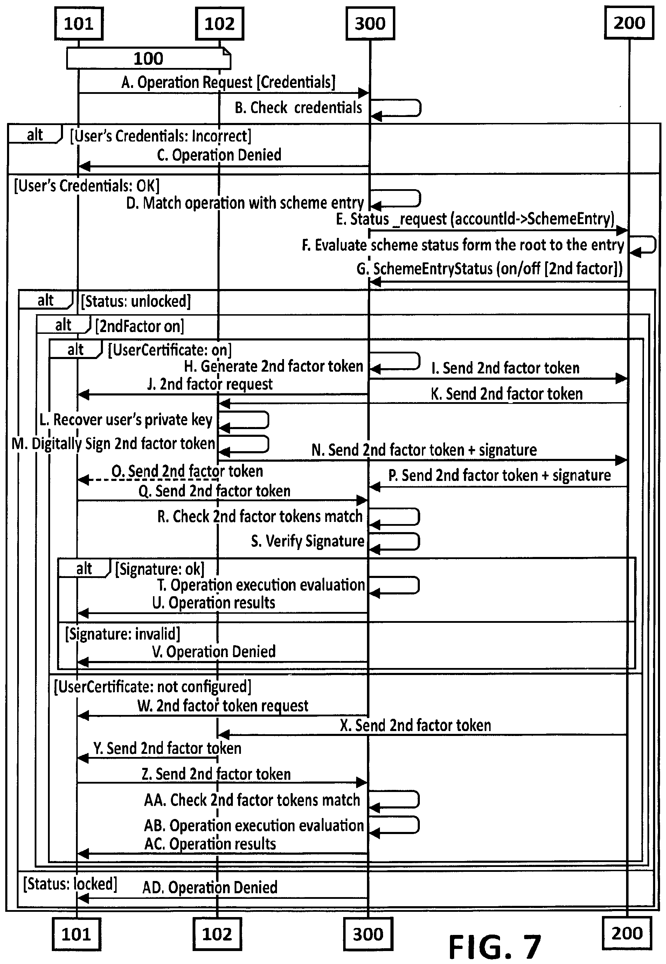

Fig. 7 illustrates an embodiment in which the accuracy of the extra authentication factor mechanism is increased by the usage of a public/private key to digitally sign an authentication token to show that the user 100 who is demanding an operation is in possession of the private key of a certificate, an specific computing mobile device with the private information built inside or a physical token guarding this private information (e.g. smartcard used as citizen card). In this case, the solution is provided in view of the fact that the first server 300 assumes the responsibility of incorporating or supporting a public key infrastructure.

Once the user 100 has requested an operation (A) and has exchanged the credentials that authenticate her/him for the first server 300 (B), the first server 300 determines which ID allows to identify this operation for this user 100 (C) to said second server 200 and performs an operation status request to the second server 200 to retrieve the status that the legitimate user has set, through the said seconds server 200 (D), for the said operation. The second server 200 checks if the said first server 300 is allowed to access to the configuration that the user 100 has established to the particular operation and recover the status (E) that can be on or off. This information can, also, indicates if the corresponding operation is reinforced with an extra authentication factor. In this embodiment, this extra authentication factor is, in addition, hardened with the usage of a digital certificate. So, based on cryptographic digital signature, it validates that the user 100, who is in possession of the credentials with the second server 200 and who knows the private key of the legitimate user 100, can provide them at the moment when the operation is requested.

The second server 200 then sends the information related with the status to the first server 300 (G), but, in difference with other embodiments, now the OTP is not generated by the second server 200. Instead of that, it is the first server 300 which generates the OTP (H) and sends it to the second server 200 (I). Here the second server 200 plays the role of "out of band" channel just making easy and secure the exchange of information. So, while the first server 300 requests the OTP to the user 100 (J), the second server 200 sends the OTP to the said dedicated program 102 (K). The dedicated program 102 receives the information and, depending of the alternative chosen to store the user's private key and operate with it, the solution retrieves this private key (L), digitally signs the OTP (M) and sends both, the OTP and the signature to the second server 200 (N). Then it allows the user 100 to enter the OTP in the interface that 300 have employed for demand this token (O). Once this token and its signature have been sent to the first server 300 (P), it is possible to determine if it matches with the token received from the second server 200 (Q and R). If both tokens are the same, then the first server 300 can assume that the user 100 who is demanding an operation could correspond with the user 100 who has signed the OTP, has sent it and, consequently, is in possession of the private key of the digital certificate stored by the first server 300.

The proposed method may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

**EP 3 014 837 B1**

The scope of the present invention is defined in the following set of claims.

**Claims**

1.  A computer implemented method to improve security in authentication/authorization systems, wherein a second server (200), in connection with a computing device of a user (100), via a second dedicated program (102) installed in said computing device, is used to manage a status of the accounts the user (100) has in a first server (300) and a status of the operations defined for a particular account, said account status and said operation status being set, whenever the user (100) wants, as valid or as invalid by the user (100) via the second dedicated program (102) and stored in a memory of the second server (200), and said account status and said operation status being set by the user (100) once a pairing process with the second server (200) being completed, said pairing process ensuring privacy to the user (100), the method comprising:

    - receiving, by said first server (300), from the user (100) via a first dedicated program (101) including a browser, a request to be logged into a service of said first server (300), said request including the provision of identification information validating the identity of the user (100) in the first server (300);
    - authenticating, by said first server (300), said identification information of the user (100) in order to authorize said service login request;
    - requesting, by the user (100) via the first dedicated program (101), once the service login request being authenticated by the first server (300), to perform an operation in the first server (300) associated with the requested service;
    - receiving, by the second server (200), from the first server (300), a request about an operation status associated to what said user (100) has established about said requested operation in order to assist the first server (300) in authorizing or rejecting the requested operation;
    - verifying, by the second server (200), said operation status previously established by the user (100) for said requested operation; and
    - in response to said operation status being established as valid by the user (100), further performing either by the second server (200) or by the first server (300) an extra authentication factor mechanism for reinforcing authorization of said requested operation, wherein said extra authentication factor mechanism includes performing a public/private key encryption process to demonstrate that the user (100) demanding the operation is in possession of the private key of a digital certificate or the use of a public/private key for generating a digital signature of an authentication token to show that the user (100) demanding the operation is in possession of the private key of a digital certificate.

2.  The computer implemented method of claim 1, wherein said request performed by the first server (300) to the second server (200) comprises a credential exchange between the first server (300) and the second server (200) in order to provide mutual authentication, and the method comprising the sending, by the second server (200), of the result of said operation status to the first server (300).

3.  The computer implemented method of claims 1 or 2, wherein said operation been reinforced with the use of said extra authentication factor mechanism including a public/private key for generating a digital signature by means of performing following actions:

    - generating and sending, by the second server (200) to the second dedicated program (102), a one-time password (OTP) that the user (100) is going to use for setting up the extra authentication factor mechanism;
    - recovering, by the second dedicated program (102), a private key of the user (100) in order to digitally sign the received OTP, said recovering been performed after the user (100) having decided to sign the received OTP within the second dedicated program (102) and having stored said private key in a software or a hardware mechanism of the computing device; and
    - sending, by the second dedicated program (102), the digitally signed OTP to the second server (200) and the digital signature employed, the latter verifying integrity of the received digitally signed OTP with the OTP that the second server (200) generated, and integrity of the private key that was used to perform said signing of the OTP with an stored user public key that the second server (200) had.

4.  The computer implemented method of claim 3, further comprising:

    - if the private key used to perform the signing of the OTP matches the user public key stored in the second

13

server (200), sending, by the second server (200) to the first server (300), the result of said operation status, performed by the first server (300), along with the generated OTP;
- requesting, by the first server (300), the OTP to the user (100), the latter recovering the OTP through the second dedicated program (102) and further sending it to the first server (300); and
- checking, by the first server (300), if the OTP received from the second server (200) and the OTP received from the user (100) matches.

5. The computer implemented method of claims 1 or 2, wherein said requested operation been reinforced with the use of said extra authentication factor mechanism including a public/private key encryption process by means of performing, after having sent, by the second server (200), the result of said operation status to the first server (300) including an OTP used by the user (100) for setting up the extra authentication factor mechanism, the following actions:

- requesting, by the first server (300) to the user (100) through an interface, said OTP used by the user (100) for setting up the extra authentication factor mechanism;
- encrypting, by the second server (200), the OTP with a public key of the user (100) and sending the encrypted OTP to the second dedicated program (102), said public key been previously stored in the second server (200) by the user (100);
- recovering, by the second dedicated program (102), a private key of the user (100) and using the private key of the user (100) to decrypt the received encrypted OTP, said recovering been performed after the user (100) having stored the private key in a software or a hardware mechanism of the computing device;
- sending, by the second dedicated program (102), the decrypted OTP to the user (100), the latter sending the decrypted OTP via said interface; and
- checking, by the first server (300), if the OTP received from the user (100) and the OTP received from second server (200) matches.

6. The computer implemented method of claims 1 or 2, wherein said requested operation been reinforced with the use of said extra authentication factor mechanism including a public/private key encryption process performed by to the first server (300) by means of performing, after the second server (200) having sent the result of said operation status to the first server (300), the following actions:

- generating, by the first server (300), an OTP that the user (100) is going to use for setting up the extra authentication factor mechanism;
- encrypting, by the first server (300), the generated OTP with a public key of the user (100) and further sending the encrypted OTP to the second server (200), said public key been previously stored in the first server (300) by the user (100);
- requesting, by the first server (300) to the user (100) through an interface, the OTP;
- sending, by the second server (200), the encrypted OTP to the second dedicated program (102) installed in the computing device of the user (100);
- recovering, by the second dedicated program (102), a private key of the user (100) and using the private key of the user (100) to decrypt the received encrypted OTP, said recovering been performed after the user (100) having stored the private key in a software or a hardware mechanism of the computing device;
- sending, by the second dedicated program (102), the decrypted OTP to the user (100), the latter sending the decrypted OTP via said interface; and
- checking, by the first server (300), if the OTP received from the user (100) and its own generated OTP matches.

7. The computer implemented method of claim 6, wherein the requesting of the OTP to the user (100) and the sending of the encrypted OTP to the second dedicated program (102) are performed at the same time.

8. The computer implemented method of claims 1 or 2, wherein said requested operation been reinforced with the use of said extra authentication factor mechanism including a public/private key for generating a digital signature executed by to the first server (300) by means of performing, after the second server (200) having sent the result of said operation status to the first server (300), the following actions:

- generating, by the first server (300), an OTP that the user (100) is going to use for setting up the extra authentication factor mechanism and sending the generated OTP to the second server (200);
- requesting, by the first server (300) to the user (100) through an interface, the OTP;
- sending, by the second server (200), the OTP to the second dedicated program (102);

- recovering, by the second dedicated program (102), a private key of the user (100) in order to digitally sign the received OTP, said recovering been performed after the user (100) having decided to sign the received OTP within the second dedicated program (102) and having stored said private key in a software or a hardware mechanism of the computing device;
- sending, by the second dedicated program (102), the digitally signed OTP and the digital signature employed for the signing to the second server (200), the latter forwarding them to the first server (300);
- sending, by the second dedicated program (102), the digitally signed OTP to the user (100), the latter sending the digitally signed OTP via said interface; and
- checking, by the first server (300), if the digitally signed OTP received from the user (100) and the digitally signed OTP received from the second server (200) matches.

9. The computer implemented method of claim 8, wherein the second dedicated program (102) performs both of said sending's, of the digitally signed OTP and the digital signature employed for the signing to the second server (200) and of the digitally signed OTP to the user (100), at the same time.

10. The computer implemented method of claim 1, wherein the second server (200) notifies the user (100) if the request to be logged into a service of said first server (300) is rejected.

11. The computer implemented method of claim 10, wherein said notification comprises one of a sending of a Short Message Service (SMS), a sending of an email, a sending of a message by a smartphone messenger application, a highlighting or pushing in said second dedicated program (102) of said user computing device.

12. The computer implemented method of claim 1, wherein said operation status is set as valid or as invalid a certain period of time.

13. The computer implemented method of claim 1, wherein the request to be logged into a service of the first server (300) and/or the request to perform an operation in the first server (300) are recorded in order to provide statistics.

14. A computer program product, which includes computer program code instructions that when executed in a computer implement the steps of the method of claim 1.

15. The computer program product of claim 14, further including computer program code instructions that when executed in a computer implement the steps of the method of claims 3, 4, 5, 6 or 8.

**Patentansprüche**

1. Computerimplementiertes Verfahren zur Verbesserung der Sicherheit in Authentifizierungs-/Autorisierungssystemen, wobei ein zweiter Server (200) in Verbindung mit einer Rechenvorrichtung eines Benutzers (100) über ein zweites dediziertes Programm (102), das in der genannten Rechenvorrichtung installiert ist, verwendet wird, um einen Zustand der Accounts, die der Benutzer (100) auf einem ersten Server (300) hat, und einen Zustand der für einen bestimmten Account definierten Vorgänge zu verwalten, wobei der genannte Accountzustand und der genannte Vorgangszustand immer dann, wenn der Benutzer (100) es wünscht, über das zweite dedizierte Programm (102) durch den Benutzer (100) als gültig oder ungültig gesetzt und in einem Speicher des zweiten Servers (200) gespeichert werden, und wobei der genannte Accountzustand und genannte Vorgangszustand durch den Benutzer (100) dann gesetzt werden, sobald ein Paarungsprozess mit dem zweiten Server (200) erfolgt ist, wobei der genannte Paarungsprozess dem Benutzer (100) den Datenschutz sichert, wobei das Verfahren umfasst:

- Empfangen durch den genannten ersten Server (300) einer Anforderung vom Benutzer (100) über ein erstes dediziertes Programm (101), welches einen Browser beinhaltet, in einem Dienst des genannten ersten Servers (300) eingeloggt zu werden, wobei die genannte Anforderung das Bereitstellen von Identifikationsinformationen beinhaltet, die die Identität des Benutzers (100) beim ersten Server (300) bestätigen;
- Authentifizieren der genannten Identifikationsinformationen des Benutzers (100) durch den genannten ersten Server (300), um die genannte Dienst-Login-Anforderung zu autorisieren;
- Anforderung des Benutzers (100) über das erste dedizierte Programm (101), nach der erfolgten Authentifizierung der Dienst-Login-Anforderung durch den ersten Server (300), einen Vorgang, der mit dem angeforderten Dienst in Zusammenhang steht, auf dem ersten Server (300) durchzuführen;
- Empfangen einer Anforderung durch den zweiten Server (200) aus dem ersten Server (300) über einen Vorgangszustand in Zusammenhang mit der Vorgabe, die der genannte Benutzer (100) zu dem genannten angeforderten Vorgang festgelegt hat, um den ersten Server (300) bei der Autorisierung oder Ablehnung des angeforderten Vorgangs zu unterstützen;

- Überprüfen des genannten Vorgangszustands, der zuvor vom Benutzer (100) für den genannten angeforderten Vorgang festgelegt wurde, durch den zweiten Server (200); und

- als Reaktion darauf, dass der genannte Vorgangszustand vom Benutzer (100) als gültig festgelegt wurde, ferner die Durchführung entweder durch den zweiten Server (200) oder durch den ersten Server (300) eines zusätzlichen Authentifizierungsfaktormechanismus zum Verstärken der Autorisierung des genannten angeforderten Vorgangs, wobei der genannte zusätzliche Authentifizierungfaktormechanismus das Ausführen eines Verschlüsselungsverfahren mit öffentlichem/privatem Schlüssel beinhaltet, um nachzuweisen, dass der Benutzer (100), der den Vorgang anfordert, im Besitz des privaten Schlüssels eines digitalen Zertifikats ist oder ein öffentlich/privater Schlüssel zum Erzeugen einer digitalen Signatur eines Authentifizierungstokens verwendet wird, um zu zeigen, dass der Benutzer (100), der den Vorgang anfordert, im Besitz des privaten Schlüssels eines digitalen Zertifikats ist.

2. Computerimplementiertes Verfahren nach Anspruch 1, wobei die vom ersten Server (300) an den zweiten Server (200) durchgeführte genannte Anforderung einen Legitimationsaustausch zwischen dem ersten Server (300) und dem zweiten Server (200) zwecks gegenseitiger Authentifizierung umfasst, und wobei das Verfahren das Senden des Ergebnisses des genannten Vorgangszustands durch den zweiten Server (200) an den ersten Server (300) umfasst.

3. Computerimplementiertes Verfahren nach Anspruch 1 oder 2, wobei der genannte Vorgang verstärkt wird durch die Verwendung des genannten zusätzlichen Authentifizierungsfaktormechanismus, der einen öffentlichen/privaten Schlüssel zum Erzeugen einer digitalen Signatur durch Ausführen folgender Schritte beinhaltet:

- Erzeugen und Senden eines Einmal-Passworts (OTP) durch den zweiten Server (200) an das zweite dedizierte Programm (102), das der Benutzer (100) zum Einrichten des zusätzlichen Authentifizierungsfaktormechanismus verwenden wird;

- Abrufen eines privaten Schlüssels des Benutzers (100) durch das zweite dedizierte Programm (102), um das empfangene OTP digital zu signieren, wobei das genannte Abrufen erfolgt, nachdem der Benutzer (100) sich entschieden hat, das empfangene OTP innerhalb des zweiten dedizierten Programms (102) zu signieren und den genannten privaten Schlüssel in einer Software oder einem Hardware-Mechanismus der Rechenvorrichtung gespeichert hat; und

- Senden des digital signierten OTP durch das zweite dedizierte Programm (102) an den zweiten Server (200); ebenso der verwendeten digitalen Signatur, wobei letzteres die Integrität des empfangenen, digital signierten OTP mit dem aus dem zweiten Server (200) erzeugten OTP und die Integrität des privaten Schlüssels, der verwendet wurde, um das genannte Signieren des OTP mit einem auf dem zweiten Server (200) vorhandenen, gespeicherten öffentlichen Benutzerschlüssel durchzuführen, überprüft.

4. Computerimplementiertes Verfahren nach Anspruch 3, ferner umfassend:

- wenn der private Schlüssel, der zum Durchführen der Signierung des OTP verwendet wird, mit dem auf dem zweiten Server (200) gespeicherten öffentlichen Benutzerschlüssel übereinstimmt, Senden des Ergebnisses des genannten Vorgangszustands, der vom ersten Server (300) ausgeführt wird, durch den zweiten Server (200) an den ersten Server (300), zusammen mit dem erzeugten OTP;

- Anfordern des OTP beim Benutzer (100) durch den ersten Server (300), wobei dieser das OTP durch das zweite dedizierte Programm (102) abruft und weiter an den ersten Server (300) sendet; und

- Überprüfen durch den ersten Server (300), ob das vom zweiten Server (200) eingegangene OTP mit dem vom Benutzer (100) eingegangenen OTP übereinstimmt.

5. Computerimplementiertes Verfahren nach Anspruch 1 oder 2, wobei der genannte angeforderte Vorgang unter Verwendung des genannten zusätzlichen Authentifizierungsfaktormechanismus, der einen Verschlüsselungsprozess mit öffentlichem/privatem Schlüssel beinhaltet, verstärkt wird, indem nach Versenden des Ergebnisses des genannten Vorgangszustands durch den zweiten Server (200) an den ersten Server (300) einschließlich eines OTP, das vom Benutzer (100) zum Einrichten des zusätzlichen Authentifizierungsfaktormechanismus verwendet wird, die folgenden Schritte durchgeführt werden:

- Anfordern des genannten OTP, das vom Benutzer (100) zum Einrichten des zusätzlichen Authentifizierungsfaktormechanismus verwendet wird, beim Benutzer (100) durch den ersten Server (300) über eine Schnittstelle(300);
- Verschlüsseln des OTP mit einem öffentlichen Schlüssel des Benutzers (100) durch den zweiten Server (200) und Senden des verschlüsselten OTP an das zweite dedizierte Programm (102), wobei der genannte öffentliche Schlüssel zuvor vom Benutzer (100) auf dem zweiten Server (200) gespeichert wurde;
- Abrufen eines privaten Schlüssels des Benutzers (100) durch das zweite dedizierte Programm (102) und Verwenden des privaten Schlüssels des Benutzers (100) zum Entschlüsseln des empfangenen verschlüsselten OTP, wobei das genannte Abrufen durchgeführt wird, nachdem der Benutzer (100) den privaten Schlüssel in einer Software oder einem Hardware-Mechanismus der Rechenvorrichtung gespeichert hat;
- Senden des entschlüsselten OTP an den Benutzer (100) durch das zweite dedizierte Programm (102), wobei dieser das entschlüsselte OTP über die genannte Schnittstelle sendet; und
- Überprüfen durch den ersten Server (300), ob das vom Benutzer (100) eingegangene OTP mit dem vom zweiten Server (200) eingegangenen OTP übereinstimmt.

6. Computerimplementiertes Verfahren nach Anspruch 1 oder 2, wobei der genannte angeforderte Vorgang unter Verwendung des genannten zusätzlichen Authentifizierungsfaktormechanismus, der einen Verschlüsselungsprozess mit öffentlichem/privatem Schlüssel beinhaltet, verstärkt wird, indem nach Versenden des Ergebnisses des genannten Vorgangszustands durch den zweiten Server (200) an den ersten Server (300) die folgenden Schritte durchgeführt werden:

- Erzeugen eines OTP durch den ersten Server (300), das der Benutzer (100) zum Einrichten des zusätzlichen Authentifizierungsfaktormechanismus verwenden wird;
- Verschlüsseln des erzeugten OTP mit einem öffentlichen Schlüssel des Benutzers (100) durch den ersten Server (300) und ferner Senden des verschlüsselten OTP an den zweiten Server (200), wobei der genannte öffentliche Schlüssel zuvor vom Benutzer (100) auf dem ersten Server (300) gespeichert wurde;
- Anfordern des OTP beim Benutzer (100) durch den ersten Server (300) über eine Schnittstelle;
- Senden des verschlüsselten OTP durch den zweiten Server (200) an das zweite dedizierte Programm (102), das in der Rechenvorrichtung des Benutzers (100) installiert ist;
- Abrufen eines privaten Schlüssels des Benutzers (100) durch das zweite dedizierte Programm (102) und Verwenden des privaten Schlüssels des Benutzers (100) zum Entschlüsseln des empfangenen verschlüsselten OTP, wobei das genannte Abrufen durchgeführt wird, nachdem der Benutzer (100) den privaten Schlüssel in einer Software oder einem Hardware-Mechanismus der Rechenvorrichtung gespeichert hat;
- Senden des entschlüsselten OTP an den Benutzer (100) durch das zweite dedizierte Programm (102), wobei dieser das entschlüsselte OTP über die genannte Schnittstelle sendet; und
- Überprüfen durch den ersten Server (300), ob das vom Benutzer (100) eingegangene OTP mit seinem eigenen erzeugten OTP übereinstimmt.

7. Computerimplementiertes Verfahren nach Anspruch 6, wobei das Anfordern des OTP beim Benutzer (100) und das Senden des verschlüsselten OTP an das zweite dedizierte Programm (102) zur gleichen Zeit durchgeführt werden.

8. Computerimplementiertes Verfahren nach Anspruch 1 oder 2, wobei der genannte angeforderte Vorgang verstärkt wird unter Verwendung des genannten zusätzlichen Authentifizierungsfaktormechanismus, der einen öffentlichen/privaten Schlüssel zum Erzeugen einer digitalen Signatur beinhaltet, die aus dem ersten Server (300) mittels Durchführen der folgenden Schritte ausgeführt wird, nachdem der zweite Server (200) das Ergebnis des genannten Vorgangszustands an den ersten Server (300) gesendet hat:

- Erzeugen eines OTP durch den ersten Server (300), den der Benutzer (100) verwenden wird, um den zusätzlichen Authentifizierungsfaktormechanismus einzurichten und den erzeugten OTP an den zweiten Server (200) zu senden;
- Anfordern des OTP beim Benutzer (100) durch den ersten Server (300) über eine Schnittstelle;
- Senden des OTP durch den zweiten Server (200) an das zweite dedizierte Programm (102);
- Abrufen eines privaten Schlüssels des Benutzers (100) durch das zweite dedizierte Programm (102), (100), um das empfangene OTP digital zu signieren, wobei das genannte Abrufen erfolgt, nachdem der Benutzer (100) sich entschieden hat, das empfangene OTP innerhalb des zweiten dedizierten Programms (102) zu signieren und den genannten privaten Schlüssel in einer Software oder einem Hardware-Mechanismus der Rechenvorrichtung gespeichert hat;
- Senden des digital signierten OTP und der für die Signierung verwendeten digitalen Signatur an den zweiten Server (200) durch das zweite dedizierte Programm (102), wobei dieser diese an den ersten Server (300) weiterleitet;

- Senden des digital signierten OTP an den Benutzer (100) durch das zweite dedizierte Programm (102), wobei dieser das digital signierte OTP über die genannte Schnittstelle sendet; und

- Überprüfen, ob das vom Benutzer (100) eingegangene digital signierte OTP mit dem vom zweiten Server (200) eingegangenen digital signierten OTP übereinstimmt.

9. Computerimplementiertes Verfahren nach Anspruch 8, wobei das zweite dedizierte Programm (102) die beiden genannten Sendevorgänge - das Senden des digital signierten OTP und der für die Signierung verwendeten digitalen Signatur an den zweiten Server (200) und das Senden des digital signierten OTP an den Benutzer (100) - gleichzeitig durchführt.

10. Computerimplementiertes Verfahren nach Anspruch 1, wobei der zweite Server (200) den Benutzer (100) benachrichtigt, wenn die Anforderung, in einen Dienst des genannten ersten Servers (300) eingeloggt zu werden, abgelehnt wird.

11. Computerimplementiertes Verfahren nach Anspruch 10, wobei die genannte Benachrichtigung eines der folgenden umfasst: Senden einer Kurzmitteilung (SMS), Senden einer E-Mail, Senden einer Nachricht durch eine Smartphone-Messenger-Anwendung, Hervorheben oder Einschieben im genannten zweiten dedizierten Programm (102) der genannten Rechenvorrichtung des Benutzers.

12. Computerimplementiertes Verfahren nach Anspruch 1, wobei der genannte Vorgangszustand für einen bestimmten Zeitraum als gültig oder ungültig festgesetzt wird.

13. Computerimplementiertes Verfahren nach Anspruch 1, wobei die Anforderung, in einen Dienst des ersten Servers (300) eingeloggt zu werden und/oder die Anforderung, einen Vorgang auf dem ersten Server (300) durchzuführen, erfasst werden, um Statistiken bereitzustellen.

14. Computerprogrammprodukt, welches Computerprogrammcodebefehle beinhaltet, welche, wenn sie in einem Computer ausgeführt werden, die Schritte des Verfahrens nach Anspruch 1 durchführen.

15. Computerprogrammprodukt nach Anspruch 14, zusätzlich beinhaltend Computerprogrammcodebefehle, welche, wenn sie in einem Computer ausgeführt werden, die Schritte des Verfahrens nach Anspruch 3, 4, 5, 6 oder 8 durchführen.

**Revendications**

1. Procédé informatique d'amélioration de sécurité dans des systèmes d'authentification/autorisation, dans lequel un deuxième serveur (200), en liaison avec un dispositif informatique d'un utilisateur (100), via un deuxième programme dédié (102) installé dans ledit dispositif informatique, est utilisé pour gérer un état des comptes que l'utilisateur (100) a dans un premier serveur (300) et un état des opérations définies pour un compte particulier, ledit état de compte et ledit état d'opération étant définis, chaque fois que l'utilisateur (100) le souhaite, comme valide ou comme invalide par l'utilisateur (100) via le deuxième programme dédié (102) et stockés dans une mémoire du deuxième serveur (200), et ledit état de compte et ledit état d'opération étant définis par l'utilisateur (100) une fois qu'un processus de couplage avec le deuxième serveur (200) est terminé, ledit processus de couplage assurant une confidentialité à l'utilisateur (100), la méthode comprenant

- recevoir, par ledit premier serveur (300), de l'utilisateur (100) via un premier programme dédié (101) incluant un navigateur, une demande de connexion à un service dudit premier serveur (300), ladite demande incluant la fourniture d'information d'identification validant l'identité de l'utilisateur (100) sur le premier serveur (300) ;
- authentifier, par ledit premier serveur (300), ladite information d'identification de l'utilisateur (100) afin d'autoriser ladite demande de connexion de service ;
- demander, par l'utilisateur (100), via le premier programme dédié (101), une fois la demande de connexion de service authentifiée par le premier serveur (300), d'effectuer une opération sur le premier serveur (300) associé au service demandé ;
- recevoir, par le deuxième serveur (200), à partir du premier serveur (300), une demande concernant un état d'opération associé à ce que ledit utilisateur (100) a établi par rapport à ladite opération demandée afin d'aider le premier serveur (300) à autoriser ou rejeter l'opération demandée ;

- vérifier, par le deuxième serveur (200), ledit état d'opération précédemment établi par l'utilisateur (100) pour ladite opération demandée ; et
- en réponse audit état d'opération étant établi comme valide par l'utilisateur (100), exécuter en outre, soit par le deuxième serveur (200) soit par le premier serveur (300), un mécanisme de facteur d'authentification supplémentaire pour renforcer l'autorisation de ladite opération demandée, dans lequel ledit mécanisme de facteur d'authentification supplémentaire comprend exécuter un processus de cryptage à clé publique/privée pour démontrer que l'utilisateur (100) demandant l'opération est en possession de la clé privée d'un certificat numérique ou l'utilisation d'une clé publique/privée pour générer une signature numérique d'un jeton d'authentification pour montrer que l'utilisateur (100) demandant l'opération est en possession de la clé privée d'un certificat numérique.

2.  Procédé informatique selon la revendication 1, dans lequel ladite demande effectuée par le premier serveur (300) au deuxième serveur (200) comprend un échange d'informations d'identification entre le premier serveur (300) et le deuxième serveur (200) afin de fournir une authentification mutuelle, et le procédé comprenant envoyer, par le deuxième serveur (200), le résultat dudit état d'opération au premier serveur (300).

3.  Procédé informatique selon les revendications 1 ou 2, dans lequel ladite opération a été renforcée par l'utilisation dudit mécanisme de facteur d'authentification supplémentaire comprenant une clé publique/privée pour générer une signature numérique par l'exécution des actions suivantes:

    - générer et envoyer, par le deuxième serveur (200) au deuxième programme dédié (102), un mot de passe à usage unique (OTP) que l'utilisateur (100) va utiliser pour configurer le mécanisme de facteur d'authentification supplémentaire;
    - récupérer, par le deuxième programme dédié (102), une clé privée de l'utilisateur (100) afin de signer numériquement l'OTP reçu, ladite récupération étant effectuée après que l'utilisateur (100) a décidé de signer l'OTP reçu dans le deuxième programme dédié (102) et a stocké ladite clé privée dans un logiciel ou un mécanisme de hardware du dispositif informatique ; et
    - envoyer, par le deuxième programme dédié (102), l'OTP signé numériquement au deuxième serveur (200) et la signature numérique employée, cette dernière vérifiant l'intégrité de l'OTP signé numériquement reçu avec l'OTP généré par le deuxième serveur (200) et l'intégrité de la clé privée utilisée pour effectuer ladite signature de l'OTP avec une clé publique d'utilisateur stockée que le deuxième serveur (200) avait.

4.  Procédé informatique selon la revendication 3, comprenant en outre :

    - si la clé privée utilisée pour effectuer la signature de l'OTP est la même que la clé publique d'utilisateur stockée dans le deuxième serveur (200), envoyer, par le deuxième serveur (200) au premier serveur (300), le résultat dudit état d'opération, effectué par le premier serveur (300), avec l'OTP généré ;
    - demander, par le premier serveur (300), l'OTP à l'utilisateur (100), ce dernier récupérant l'OTP par le deuxième programme dédié (102) et l'envoyant ensuite au premier serveur (300) ; et
    - vérifier, par le premier serveur (300), si l'OTP reçu à partir du deuxième serveur (200) et l'OTP reçu à partir de l'utilisateur (100) sont les mêmes.

5.  Procédé informatique selon les revendications 1 ou 2, dans lequel ladite opération demandée a été renforcée par l'utilisation dudit mécanisme de facteur d'authentification supplémentaire comprenant un processus de cryptage à clé publique/privée au moyen de l'exécution, après avoir envoyé, par le deuxième serveur (200), le résultat dudit état d'opération au premier serveur (300) comprenant un OTP utilisé par l'utilisateur (100) pour configurer le mécanisme de facteur d'authentification supplémentaire, les actions suivantes :

    - demander, par le premier serveur (300) à l'utilisateur (100) par l'intermédiaire d'une interface, ledit OTP utilisé par l'utilisateur (100) pour configurer le mécanisme de facteur d'authentification supplémentaire ;
    - crypter, par le deuxième serveur (200), l'OTP avec une clé publique de l'utilisateur (100) et envoyer l'OTP crypté au deuxième programme dédié (102), ladite clé publique étant préalablement stockée dans le deuxième serveur (200) par l'utilisateur (100) ;
    - récupérer, par le deuxième programme dédié (102), une clé privée de l'utilisateur (100) et utiliser la clé privée de l'utilisateur (100) pour décrypter l'OTP crypté reçu, ladite récupération étant effectuée après que l'utilisateur (100) a stocké la clé privée dans un logiciel ou un mécanisme de hardware du dispositif informatique ;
    - envoyer par le deuxième programme dédié (102), l'OTP décrypté à l'utilisateur (100), ce dernier envoyant l'OTP décrypté via ladite interface ; et

- vérifier, par le premier serveur (300), si l'OTP reçu à partir de l'utilisateur (100) et l'OTP reçu à partir du deuxième serveur (200) sont les mêmes.

**6.** Procédé informatique selon les revendications 1 ou 2, dans lequel ladite opération demandée a été renforcée par l'utilisation dudit mécanisme de facteur d'authentification supplémentaire comprenant un processus de cryptage à clé publique/privée exécuté par le premier serveur (300) au moyen de l'exécution, après que le deuxième serveur (200) ait envoyé le résultat dudit état d'opération au premier serveur (300), des actions suivantes :

- générer, par le premier serveur (300), un OTP que l'utilisateur (100) va utiliser pour configurer le mécanisme de facteur d'authentification supplémentaire ;
- crypter, par le premier serveur (300), l'OTP généré avec une clé publique de l'utilisateur (100) et envoyer en outre l'OTP crypté au deuxième serveur (200), ladite clé publique étant préalablement stockée dans le premier serveur (300) par l'utilisateur (100) ;
- demander, par le premier serveur (300) à l'utilisateur (100) par l'intermédiaire d'une interface, l'OTP ;
- envoyer, par le deuxième serveur (200), l'OTP crypté au deuxième programme dédié (102) installé dans le dispositif informatique de l'utilisateur (100);
- récupérer, par le deuxième programme dédié (102), une clé privée de l'utilisateur (100) et utiliser la clé privée de l'utilisateur (100) pour décrypter l'OTP crypté reçu, ladite récupération étant effectuée après que l'utilisateur (100) a stocké la clé privée dans un logiciel ou un mécanisme de hardware du dispositif informatique ;
- envoyer, par le deuxième programme dédié (102), l'OTP décrypté à l'utilisateur (100), ce dernier envoyant l'OTP décrypté via ladite interface ; et
- vérifier, par le premier serveur (300), si l'OTP reçu à partir de l'utilisateur (100) et son propre OTP généré sont les mêmes.

**7.** Procédé informatique selon la revendication 6, dans lequel la demande de l'OTP à l'utilisateur (100) et l'envoi de l'OTP crypté au deuxième programme dédié (102) sont effectués en même temps.

**8.** Procédé informatique selon les revendications 1 ou 2, dans lequel ladite opération demandée a été renforcée par l'utilisation dudit mécanisme de facteur d'authentification supplémentaire comprenant une clé publique/privée pour générer une signature numérique exécutée par le premier serveur (300) au moyen de l'exécution, après que le deuxième serveur (200) ait envoyé le résultat dudit état d'opération au premier serveur (300), les actions suivantes :

- générer, par le premier serveur (300), un OTP que l'utilisateur (100) va utiliser pour configurer le mécanisme de facteur d'authentification supplémentaire et envoyer le OTP généré au deuxième serveur (200) ;
- demander, par le premier serveur (300) à l'utilisateur (100) par l'intermédiaire d'une interface, l'OTP ;
- envoyer, par le deuxième serveur (200), l'OTP au deuxième programme dédié (102) ;
- récupérer, par le deuxième programme dédié (102), une clé privée de l'utilisateur (100) afin de signer numériquement l'OTP reçu, ladite récupération étant effectuée après que l'utilisateur (100) ait décidé de signer l'OTP reçu dans le deuxième programme dédié (102) et ait stocké ladite clé privée dans un logiciel ou un mécanisme de hardware du dispositif informatique ;
- envoyer, par le deuxième programme dédié (102), l'OTP signé numériquement et la signature numérique utilisée pour la signature au deuxième serveur (200), ce dernier les faisant suivre au premier serveur (300) ;
- envoyer, par le deuxième programme dédié (102), l'OTP signé numériquement à l'utilisateur (100), ce dernier envoyant l'OTP signé numériquement via ladite interface ; et
- vérifier, par le premier serveur (300), si l'OTP signé numériquement reçu à partir de l'utilisateur (100) et l'OTP signé numériquement reçu à partir du deuxième serveur (200) sont les mêmes.

**9.** Procédé informatique selon la revendication 8, dans lequel le deuxième programme dédié (102) exécute simultanément lesdits envois, de l'OTP signé numériquement et de la signature numérique utilisée pour la signature au deuxième serveur (200) et de l'OTP signé numériquement à l'utilisateur (100).

**10.** Procédé informatique selon la revendication 1, dans lequel le deuxième serveur (200) notifie l'utilisateur (100) si la demande de connexion à un service dudit premier serveur (300) est rejetée.

**11.** Procédé informatique selon la revendication 10, dans lequel ladite notification comprend un parmi un envoi d'un service de messages courts (SMS), un envoi d'un e-mail, un envoi d'un message par une application de messagerie pour téléphone intelligent, une mise en évidence ou une poussée dudit deuxième programme dédié (102) dudit dispositif informatique de l'utilisateur.

**12.** Procédé informatique selon la revendication 1, dans lequel ledit état d'opération est défini comme valide ou comme invalide pendant une certaine période de temps.

**13.** Procédé informatique selon la revendication 1, dans lequel la demande de connexion à un service du premier serveur (300) et/ou la demande d'exécution d'une opération dans le premier serveur (300) sont enregistrées afin de fournir des statistiques.

**14.** Programme d'ordinateur, qui comprend des instructions de code de programme d'ordinateur qui, lorsqu'elles sont exécutées dans un ordinateur, mettent en oeuvre les étapes du procédé selon la revendication 1.

**15.** Programme d'ordinateur selon la revendication 14, comprenant en outre des instructions de code de programme d'ordinateur qui, lorsqu'elles sont exécutées dans un ordinateur, mettent en oeuvre les étapes du procédé selon les revendications 3, 4, 5, 6 ou 8.

**FIG. 1**

FIG. 2

**FIG. 3**

101   102   300   200

100

A. Operation Request [Credentials]

B. Check credentials

alt [User's Credentials: OK]

C. Match operation with scheme entry

D. Status _request (accountId->SchemeEntry)

E. Evaluate scheme status form the root to the entry

F. SchemeEntryStatus (on/off [2nd factor])

alt [Status: unlocked]

alt [2ndFactor on]

G. 2nd factor token request

alt [UserCertificate: configured]

H. Encrypt OTP with user's public key

I. Send 2nd factor token Encrypted

J. Recover user's private key

K. Decrypt the token

L. Send 2nd factor token

M. Send 2nd factor token

N. Check 2nd fator tokens match

[UserCertificate: not configured]

O. Send 2nd factor token

P. Send 2nd factor token

Q. Send 2nd factor token

R. Check 2nd factor tokens match

S. Operation execution evaluation

T. Operation results

[Status: locked]

U. Operation Denied

[User's Credentials: Incorrect]

V. Operation Denied

101   102   300   200

# FIG. 4

| 101 | 102 | 300 | 200 |

**100**

A. Operation Request [Credentials]

B. Check credentials

alt [User's Credentials: OK]

C. Match operation with scheme entry

D. Status _request (accountId->SchemeEntry)

E. Evaluate scheme status form the root to the entry

alt [Status: unlocked]

alt [2ndFactor on]

alt [UserCertificate: configured]     F. Send 2nd factor token

G. Recover user's private key

H. Sign the token                I. Send 2nd factor token + Signature

J. Verify token integrity

K. Verify signature integrity

alt [signature: ok]              L. SchemeEntryStatus (on [2nd factor])

M. 2nd factor token request

N. Send 2nd factor token

O. Send 2nd factor token

P. Check 2nd fator tokens match

[signature: invalid)            Q. SchemeEntryStatus (off)

R. Operation Denied

[UserCertificate: not configured]    S. SchemeEntryStatus (on/off [2nd factor])

T. 2nd factor token request

U. Send 2nd factor token

V. Send 2nd factor token

W. Send 2nd factor token

X. Check 2nd factor tokens match

Y. Operation execution evaluation

Z. Send operation results

[Status: locked]                 AA. SchemeEntryStatus (off)

AB. Operation Denied

[User's Credentials: Incorrect]

AC. Operation Denied

| 101 | 102 | 300 | 200 |

**FIG. 5**

**FIG. 6**

FIG. 7

**REFERENCES CITED IN THE DESCRIPTION**

**Patent documents cited in the description**

- US 2009183247 A1
- WO 02095554 A2

**Non-patent literature cited in the description**

- The quest to replace passwords: A framework for comparative evaluation of web authentication schemes. In Security and Privacy (SP). **BONNEAU, J. ; HERLEY, C. ; VAN OORSCHOT, P. C. ; STAJANO, F.** IEEE Symposium on. IEEE, May 2012, 553-567
- **BURR, W. E. ; DODSON, D. F. ; POLK, W. T.** Electronic authentication guideline. *NIST Special Publication,* 2006, vol. 800, 63
- Nemesis: Preventing Authentication & Access Control Vulnerabilities in Web Application. **DALTON, M. ; KOZYRAKIS, C. ; ZELDOVICH, N.** Proceedings of the 18th conference on USENIX security symposium. USENIX Association, 267-282
- **EVANS, D. ; BOND, P. ; BEMENT, A.** Security Requirements for Cryptographic Modules. *FIPS PUB 140-2 - FEDERAL INFORMATION PROCESSING STANDARDS PUBLICATION,* http://csrc.nist.gov/publications/fips/fips140-2/fips 1402.pdf
- **MCGLOIN M. ; HUNT P.** *OAuth 2.0 Threat Model and Security Considerations,* January 2013, ISSN 2070-1721, http://tools.ietf.org/pdf/rfc6819.pdf
- Static detection of Access control vulnerability in web applications. **SUN, F. ; XU, L. ; SU,Z.** Proceedings of the 20th USENIX conference on Security. USENIX, August 2011, 11-11
- **WANG, R. ; ZHOU, Y. ; CHEN, S. ; QADEER, S. ; EVANS, D. ; GUREVICH, Y.** Explicating SDKs: Uncovering Assumptions Underlying Secure Authentication and Authorization. *Microsoft Research Technical Report MSR-TR-2013,* 2013, vol. 37